# EUROPÄISCHE PATENTANMELDUNG

(11) **EP 1 302 392 A2**
(43) Veröffentlichungstag der Anmeldung: **16.04.2003**
(21) Anmeldenummer: 02018023.8
(22) Anmeldetag: 12.08.2002
(51) Int. Cl.: B62H 5/18

(54) **Bremsscheibenschloss**

(30) Priorität: 12.10.2001 DE 10150440
(71) Anmelder: ABUS August Bremicker Söhne KG, 58292 Wetter (DE)
(72) Erfinder:
(74) Vertreter: Manitz, Finsterwald & Partner GbR

(57) **Zusammenfassung**

Die Erfindung betrifft ein Bremsscheibenschloss für Motorräder mit einem Schlosskörper und einem hieran verriegelbaren Kloben, welcher einen Sperranker, einen Verriegelungsfortsatz sowie einen dazwischen angeordneten Klobenhals aufweist, wobei der Schlosskörper einen Aufnahmebereich zur Aufnahme des Verriegelungsfortsatzes des Klobens und eine Schließmechanik zur Verriegelung des Verriegelungsfortsatzes im Aufnahmebereich besitzt, wobei derjenige Klobenhalsabschnitt, der bei im Aufnahmebereich verriegeltem Verriegelungsfortsatz aus dem Schlosskörper hervorsteht, derart bemessen ist, dass seine Länge größer ist als der Abstand der einander abgewandten Außenseiten zweier axial beabstandeter Bremsscheiben.

## Beschreibung

Die Erfindung betrifft ein Bremsscheibenschloss für motorgetriebene Zweiräder mit einem Schlosskörper und einem hieran verriegelbaren Kloben, welcher einen Sperranker, einen Verriegelungsfortsatz sowie einen dazwischen angeordneten Klobenhals aufweist, wobei der Schlosskörper einen Aufnahmebereich zur Aufnahme des Verriegelungsfortsatzes des Klobens und eine Schließmechanik zur Verriegelung des Verriegelungsfortsatzes im Aufnahmebereich besitzt.

Üblicherweise besitzt der Schlosskörper neben dem genannten Aufnahmebereich auch noch einen Schließzylinder und einen durch eine Drehbetätigung des Schließzylinders bewegbaren Riegel zum Verriegeln oder Entriegeln des in den Aufnahmebereich eingeführten Verriegelungsfortsatzes.

Um mit Hilfe eines Bremsschreibenschlosses der genannten Art ein motorgetriebenes Zweirad abzusperren, wird der Kloben mit seinem Verriegelungsfortsatz voraus durch eine Durchbrechung, z.B. eine Lüftungsöffnung einer Motorradbremsscheibe geführt, so dass der Sperranker an einem Ende der Durchbrechung anliegt und die Durchbrechung den Klobenhals umgreift. Danach wird der Schlosskörper derart auf den aus dem anderen Ende der Durchbrechung herausstehenden Verriegelungsfortsatz aufgesetzt, dass dieser in den Aufnahmebereich des Schlosskörpers hineinragt. Anschließend durch eine Drehbetätigung des Schließzylinders der Riegel über den Verriegelungsfortsatz geführt. Aufgrund des Anliegens des Sperrankers und des verriegelten Schlosskörpers jeweils an einem Ende der Durchlassöffnung ist das Klobenschloss gegen eine Entnahme aus der Durchlassöffnung gesichert.

Die vorliegende Erfindung ist nicht auf solche Bremsscheibenschlösser beschränkt, bei denen der Riegel durch eine Drehbetätigung des Schließzylinders bewegbar ist. Vielmehr sind von der Erfindung beliebige Verriegelungsmechanismen zur Verriegelung des Verriegelungsfortsatzes im Aufnahmebereich des Schlosskörpers umfasst.

Problematisch an Bremsscheibenschlössern der genannten Art ist die Tatsache, dass sich mittels solcher Bremsscheibenschlösser verriegelte motorgetriebene Zweiräder trotzdem oftmals unbefugt entwenden lassen, indem die Bremsscheibe von der zugehörigen Nabe gelöst und gemeinsam mit dem daran verriegelten Bremsscheibenschloss z.B. an der die Nabe tragenden Gabel fixiert wird. Durch diese Maßnahme wird erreicht, dass sich Bremsscheibenschloss und Bremsscheibe während einer Bewegung des motorgetriebenes Zweirads relativ zur Gabel praktisch nicht bewegen können, eine Relativbewegung zwischen Nabe und abmontierter Bremsscheibe jedoch möglich ist, so dass eine Drehung der Nabe in der Gabel nicht mehr verhindert wird. Auf die genannte Weise kann ein motorgetriebenes Zweirad beispielsweise aus einem öffentlich gut zugänglichen oder sogar überwachten Bereich herausbewegt bzw. -geschoben werden, so dass dann an einem weniger beachteten Ort in Ruhe die Bremsscheibe zerstört und durch eine neue Bremsscheibe ersetzt oder alternativ das Bremsscheibenschloss mit geeigneten Werkzeugen von der Bremsscheibe gelöst werden kann.

Eine Aufgabe der Erfindung besteht folglich darin, ein Bremsscheibenschloss der eingangs genannten Art bereitzustellen, mittels welchem das unbefugte Entwenden eines motorgetriebenes Zweirads zusätzlich erschwert wird.

Erfindungsgemäß wird diese Aufgabe dadurch gelöst, dass derjenige Klobenhalsabschnitt, der bei im Aufnahmebereich verriegeltem Verriegelungsfortsatz aus dem Schlosskörper hervorsteht, derart bemessen ist, dass seine Länge größer ist als der Abstand der einander abgewandten Außenseiten zweier axial beabstandeter Bremsscheiben.

Diese erfindungsgemäße Ausbildung eines Bremsscheibenschlosses macht sich die Tätsache zunutze, dass zunehmend motorgetriebene Zweiräder Verbreitung finden, die an einer Nabe zwei axial beabstandete Bremsscheiben aufweisen. Ein erfindungsgemäßes Bremsscheibenschloss kann bei solchen motorgetriebene Zweirädern durch miteinander im wesentlichen ausgerichtete Durchbrechungen beider Bremsscheiben hindurchgesteckt und anschließend verriegelt werden. Da sich die beiden Bremsscheiben in der Regel zu beiden Seiten der an der Nabe befestigten Speichen oder Felgen befinden, wird hierdurch erreicht, dass sich der Klobenhals des Bremsscheibenschlosses nicht nur durch die Durchbrechungen beider Bremsscheiben sondern auch durch die dazwischenliegenden Speichen oder Felgen erstreckt.

Wenn man nun bei einem erfindungsgemäßen Bremsscheibenschloss beide Bremsscheiben von der Nabe lösen und gemeinsam mit dem Bremsscheibenschloss an der Gabel fixieren würde, könnte sich die in der Gabel gehaltene Nabe dennoch nicht drehen, da eine solche Drehbewegung durch die am Klobenhals anstoßenden Speichen oder Felgen verhindert wäre. Insofern ist die in Verbindung mit dem Stand der Technik geschilderte Möglichkeit, die Bremsscheibe von der Nabe zu lösen und das motorgetriebenes Zweirad wegzuschieben durch ein erfindungsgemäßes Bremsscheibenschloss äußerst wirksam und unumgehbar verhindert.

Bevorzugte Ausführungsformen der Erfindung sind in den Unteransprüchen beschrieben.
Vorteilhaft ist es insbesondere, wenn der Klobenhalsabschnitt, der bei im Aufnahmebereich verriegeltem Verriegelungsfortsatz aus dem Schlosskörper hervorsteht, eine Länge von mindestens 5 cm, insbesondere von mindestens 10 cm aufweist. Bei Bremsscheibenschlössern gemäß Stand der Technik sind die genannten Klobenhalsabschnitte hingegen derart bemessen, dass sie in der Regel 2 bis 3 cm lang sind, was ein Hindurchstecken des Klobenhalses durch zwei benachbarte Bremsscheiben unmöglich macht. Die vorstehend genannten, bevorzugten Längen ermöglichen es hingegen zumindest bei bestimmten Motorradtypen, beide benachbarten Bremsscheiben mit dem erfindungsgemäßen Bremsscheibenschloss zu verriegeln.

Besonders bevorzugt ist es, wenn der Klobenhalsabschnitt, der bei im Aufnahmebereich verriegeltem Verriegelungsfortsatz aus dem Schlosskörper hervorsteht, eine Länge zwischen 10 cm und 25 cm, insbesondere zwischen 15 cm und 20 cm aufweist. Mit diesen Längen können die meisten handelsüblichen motorgetriebene Zweiräder mit zwei an einer Nabe befestigten Bremsscheiben verriegelt werden.

Von Vorteil ist es, wenn der Klobenhalsabschnitt, der bei im Aufnahmebereich verriegeltem Verriegelungsfortsatz aus dem Schlosskörper hervorsteht, derart bemessen ist, dass seine Länge 1 mm bis 5 mm, insbesondere 1 mm bis 2 mm größer ist als der Abstand der einander abgewandten Außenseiten zweier axial beabstandeter Bremsscheiben. Durch diese Längenwahl wird erreicht, dass der zwischen einer Bremsscheibe und dem Schlosskörper sowie der zwischen der anderen Bremsscheibe und dem Sperranker vorhandene, im verriegelten Zustand frei zugängliche Bereich des Klobenhalses sehr kurz bemessen ist, so dass dieser Bereich für Aufbruchwerkzeuge nur schwer zugänglich ist. Bei der genannten Ausführungsform ist es ferner vorteilhaft, wenn für jeden Motorradtyp bzw. für jeden Bremsscheibenabstand individuelle Klobenhalslängen zur Verfügung gestellt werden, um die vorstehend genannten, vorteilhaften Kriterien für jeden Motorradtyp zu erfüllen.

Alternativ zu der vorstehend genannten Ausführungsform ist es jedoch auch möglich, den Klobenhalsabschnitt, der bei im Aufnahmebereich verriegeltem Verriegelungsfortsatz aus dem Schlosskörper hervorsteht, derart zu bemessen, dass seine Länge 0,8 cm bis 3 cm, insbesondere 1 cm bis 2 cm größer ist als der Abstand der einander abgewandten Außenseiten zweier axial beabstandeter Bremsscheiben. Auf diese Weise wird zwar der im verriegelten Zustand frei zugängliche Bereich des Klobenhalses größer, es wird jedoch dadurch auch ermöglicht, zusätzlich noch ein Kettenglied oder eine Seilschlaufe über den Klobenhals zu stecken, bevor das erfindungsgemäße Bremsscheibenschloss verriegelt wird. So lässt sich mit dem erfindungsgemäßen Bremsscheibenschloss zusätzlich auch noch ein Seil oder eine Kette am Bremsscheibenschloss fixieren, das bzw. die dann dazu genutzt werden kann, das motorgetriebenes Zweirad an einen stationären Gegenstand, beispielsweise einen Laternenpfahl anzuschließen und/oder Einzelteile des motorgetriebenes Zweirads oder einen Motorradhelm am motorgetriebenes Zweirad zu sichern. Der im verriegelten Zustand frei zugängliche Bereich des Klobenhalses wird dabei bevorzugt so bemessen, dass er nur 1 mm bis 5 mm, insbesondere 1 mm bis 2 mm länger ist als die Erstreckung einer zu verriegelnden Seilschlaufe oder eines zu verriegelnden Kettengliedes in Längsrichtung des Klobenhalses.

Schließlich ist es bei erfindungsgemäßen Bremsscheibenschlössern grundsätzlich vorteilhaft, wenn der Schlosskörper und/oder der Sperranker derart bemessen ist, dass seine Abmessung in Richtung der Bremsscheibenachsen größer ist, als der in Richtung der Bremsscheibenachsen bestehende Abstand zwischen einer Bremsscheibe und dem ihr benachbarten Schenkel der Gabel eines motorgetriebenes Zweirads. So wird sichergestellt, dass sich das Bremsscheibenschloss nicht an der Gabel vorbei bewegen kann, wie dies jedoch auch bei Bremsscheibenschlössern aus dem Stand der Technik bekannt ist.

Die Erfindung wird nachfolgend anhand eines Ausführungsbeispiels unter Bezugnahme auf die Zeichnungen erläutert; in diesen zeigen:
- Fig. 1: eine schematische Seitenansicht eines erfindungsgemäßen Bremsscheibenschlosses mit geschnittenem Schlosskörper, und
- Fig. 2: eine um 90° gedrehte Ansicht eines Bremsscheibenschlosses gemäß Fig. 1 mit gestrichelt angedeuteten Bremsscheiben.

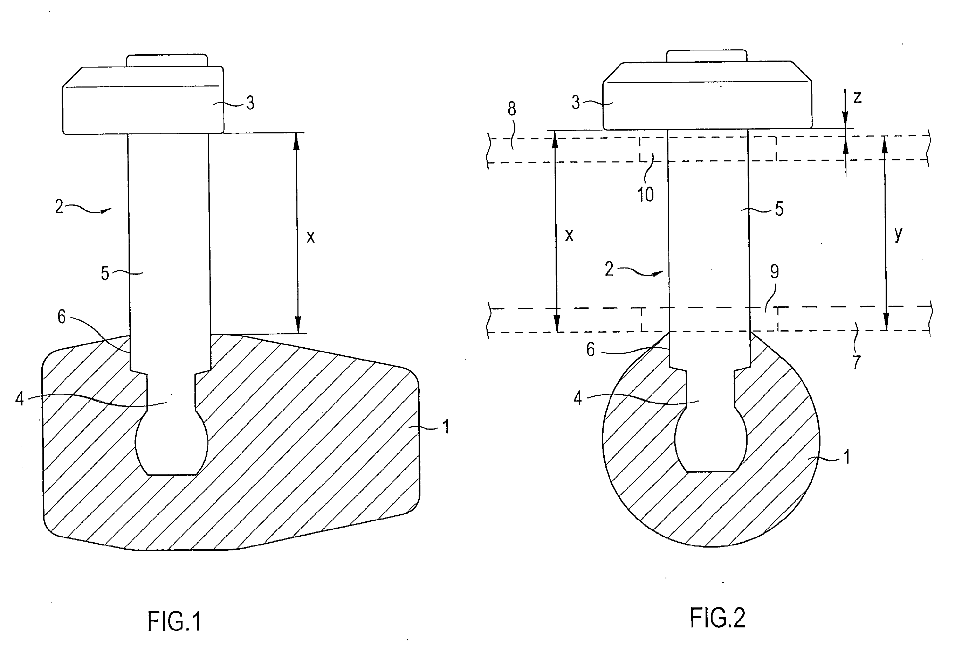

Fig. 1 zeigt einen Schlosskörper 1 in Seitenansicht, welcher lediglich schematisch dargestellt und so geschnitten ist, dass deutlich wird, in welcher Weise ein Kloben 2 in den Schlosskörper 1 hineinragt. Der Kloben 2 besitzt an seinem dem Schlosskörper 1 abgewandten Ende einen Sperranker 3, welcher fest mit einem Klobenhals 5 verbunden ist, der sich im verriegelten Zustand des Bremsscheibenschlosses zwischen Sperranker und Schlosskörper 1 erstreckt. An dem dem Sperranker 3 abgewandten Ende des Klobenhalses 2 ist ein Verriegelungsfortsatz 4 vorgesehen, welcher in eine Aufnahme 6 im Schlosskörper 1 eingeführt und dort verriegelt werden kann. Die Verriegelungsmechanik ist aus Gründen der Übersichtlichkeit in den Figuren nicht dargestellt und lässt sich auf beliebige Weise realisieren.

Der Abschnitt des Klobenhalses 5, der bei im Aufnahmebereich 6 verriegeltem Verriegelungsfortsatz 4 aus dem Schlosskörper 1 hervorsteht, ist erfindungsgemäß derart bemessen, dass seine Länge x größer ist als der Abstand der einander abgewandten Außenseiten zweier axial beabstandeter Bremsscheiben, die an einer Nabe eines motorgetriebenes Zweirads befestigt sind. In einer bevorzugten Ausführungsform beträgt die Länge x zwischen 15 cm und 20 cm.

Die Position der beiden axial beabstandeten Bremsscheiben wird aus Fig. 2 ersichtlich, die eine um 90° gedrehte Ansicht der Fig. 1 darstellt. Fig. 2 veranschaulicht zwei an einer nicht dargestellten Nabe eines motorgetriebenes Zweirads befestigte, axial voneinander beabstandete Bremsscheiben 7, 8, die jeweils miteinander ausgerichtete Durchbrechungen 9, 10 besitzen. Der Abstand der einander abgewandten Außenseiten der Bremsscheiben 7, 8 ist in Fig. 2 mit y bezeichnet.

Der Klobenhals 5 wurde gemäß Fig. 2 durch die Durchbrechungen 9, 10 der Bremsscheiben 7, 8 gesteckt, woraufhin anschließend der Schlosskörper 1 am Verriegelungsfortsatz 4 verriegelt wurde. Auf diese Weise wird der Klobenhals 5 in dem zwischen den beiden Bremsscheiben 7, 8 befindlichen Bereich fixiert, so dass es unmöglich wird, dass sich zwischen den Bremsscheiben befindlichen Speichen oder Felgen an den Durchbrechungen 9, 10 vorbei bewegen können, falls die Bremsscheiben 7, 8 von der nicht dargestellten Nabe gelöst würden.

Die Bremsscheibe 7 liegt mit ihrer der Bremsscheibe 8 abgewandten Außenseite am Schlosskörper 1 an. Zwischen der der Bremsscheibe 7 abgewandten Außenseite der Bremsscheibe 8 und der der Bremsscheibe 8 zugewandten Innenseite des Sperrankers 3 besteht lediglich ein geringer Abstand z, der beispielsweise 1 bis 2 mm betragen kann. Die Summen der Abstände y und z sind gleich dem Abstand x des im verriegelten Zustand freien Bereichs des Klobenhalses 5. Durch den vergleichsweise kleinen Abstand y wird sichergestellt, dass der Klobenhals 5 im verriegelten Zustand nur eine sehr kurze Angriffsfläche für eventuelle Aufbruchswerkzeuge bietet.

Vorstehend wurde bereits erläutert, dass in einer alternativen Ausführungsform der Abstand y auch beispielsweise zwischen 0,8 cm und 3 cm betragen kann, so dass zwischen Bremsscheibe 8 und Sperranker 3 auch noch ein Kettenglied oder eine Seilschlaufe mit dem erfindungsgemäßen Bremsscheibenschloss verriegelt werden können.

## Patentansprüche

1. Bremsscheibenschloss für motorgetriebene Zweiräder mit einem Schlosskörper (1) und einem hieran verriegelbaren Kloben (2), welcher einen Sperranker (3), einen Verriegelungsfortsatz (4) sowie einen dazwischen angeordneten Klobenhals (5) aufweist, wobei der Schlosskörper (1) einen Aufnahmebereich (6) zur Aufnahme des Verriegelungsfortsatzes (4) des Klobens (2) und eine Schließmechanik zur Verriegelung des Verriegelungsfortsatzes (4) im Aufnahmebereich (6) besitzt,
**dadurch gekennzeichnet,**
**dass** derjenige Klobenhalsabschnitt, der bei im Aufnahmebereich (6) verriegelten Verriegelungsfortsatz (4) aus dem Schlosskörper (1) hervorsteht, derart bemessen ist, dass seine Länge (x) größer ist als der Abstand der einander abgewandten Außenseiten zweier axial beabstandeter Bremsscheiben (7, 8).

2. Bremsscheibenschloss nach Anspruch 1,
**dadurch gekennzeichnet,**
**dass** der Klobenhalsabschnitt, der bei im Aufnahmebereich (6) verriegeltem Verriegelungsfortsatz (4) aus dem Schlosskörper (1) hervorsteht, eine Länge (x) von mindestens 5 cm, insbesondere von mindestens 10 cm aufweist.

3. Bremsscheibenschloss nach Anspruch 2,
**dadurch gekennzeichnet,**
**dass** der Klobenhalsabschnitt, der bei im Aufnahmebereich (6) verriegeltem Verriegelungsfortsatz (4) aus dem Schlosskörper (1) hervorsteht, eine Länge (x) zwischen 10 cm und 25 cm, insbesondere zwischen 15 cm und 20 cm aufweist.

4. Bremsscheibenschloss nach einem der vorhergehenden Ansprüche,
**dadurch gekennzeichnet,**
**dass** der Klobenhalsabschnitt, der bei im Aufnahmebereich verriegelten Verriegelungsfortsatz (4) aus dem Schlosskörper (1) hervorsteht, derart bemessen ist, dass seine Länge (x) 1mm bis 5mm, insbesondere 1mm bis 2mm größer ist als der Abstand der einander abgewandten Außenseiten zweier axial beabstandeter Bremsscheiben (7, 8).

5. Bremsscheibenschloss nach einem der Ansprüche 1 bis 3,
**dadurch gekennzeichnet,**
**dass** der Klobenhalsabschnitt, der bei im Aufnahmebereich (6) verriegelten Verriegelungsfortsatz (4) aus dem Schlosskörper (1) hervorsteht, derart bemessen ist, dass seine Länge (x) 0,8cm bis 3cm, insbesondere 1cm bis 2 cm größer ist als der Abstand der einander abgewandten Außenseiten zweier axial beabstandeter Bremsscheiben (7, 8).

6. Bremsscheibenschloss nach einem der vorhergehenden Ansprüche,
**dadurch gekennzeichnet,**
**dass** der Schlosskörper (1) und/oder der Sperranker (3) derart bemessen ist, dass seine Abmessung in Richtung der Bremsscheibenachsen größer ist, als der in Richtung der Bremsscheibenachsen bestehende Abstand zwischen einer Bremsscheibe (7, 8) und dem ihr benachbarten Schenkel der Gabel eines Motorrads.
